# EUROPÄISCHE PATENTANMELDUNG

(11) **EP 3 480 557 A1**
(43) Veröffentlichungstag der Anmeldung: **08.05.2019**
(21) Anmeldenummer: 18203643.4
(22) Anmeldetag: 31.10.2018
(51) Int. Cl.: G01B 21/04, G01B 5/008, G05B 19/404, B23Q 17/20, G05B 19/401

(54) **VERFAHREN ZUM MESSEN EINES WERKSTÜCKES MIT EINEM KOORDINATENMESSGERÄT**

(30) Priorität: 03.11.2017 DE 102017125677
(71) Anmelder: Hexagon Metrology GmbH, 35578 Wetzlar (DE)
(72) Erfinder: Kirchhof, Michael, 35745 Herborn (DE)
(74) Vertreter: Knefel, Cordula

(57) **Zusammenfassung**

Verfahren zum Messen eines Werkstückes mit einem Koordinatenmessgerät, mit folgenden Verfahrensschritten:
a) der Taststift wird für einen Antastvorgang in Richtung des Werkstückes bewegt,
b) der Taststift wird in Kontakt mit dem Werkstück gebracht und ausgelenkt,
c) die Auslenkung des Taststiftes wird durch Messwerte erfasst,
d) der Taststift wird zurückgefahren und die Messwerte der Auslenkung werden erfasst,
bei dem die Verfahrensschritte a) und b) ohne Unterbrechung der Bewegung des Taststiftes in Richtung Werkstück durchgeführt werden, und bei dem, wenn der Taststift und das Werkstück nicht mehr in Kontakt sind und der Taststift in Ruhe ist, der bestehende Off-Set erfasst und kompensiert wird.

## Beschreibung

Die Erfindung betrifft ein Verfahren zum Messen eines Werkstückes mit einem Koordinatenmessgerät. Insbesondere weist das Koordinatenmessgerät einen Tastkopf mit einem einwechselbaren Taststift auf.

Aus der Praxis ist bekannt, zum dimensionellen Messen von Werkstücken von Koordinatenmessgeräten taktile und nicht taktile Sensoren zu verwenden, die fest oder lösbar fest an einem Koordinatenmessgerät angeordnet sind.

Die aus der Praxis bekannten Koordinatenmessgeräte bestehen aus mehreren beweglichen Achsen, die es ermöglichen, den Sensor im Raum so zu bewegen, dass Werkstücke dimensionell vermessen werden können.

Taktile Sensoren werden auch als Tastköpfe bezeichnet. Sie bestehen aus einem festen Teil, der mit einer Achse des Koordinatenmessgerätes fest oder lösbar fest verbunden ist, sowie aus einem gegen den festen Teil beweglichen Teil, der einen so genannten Taststift trägt, der aus einem länglichen Schaft besteht und an dessen einem Ende ein Antastelement, wie zum Beispiel eine Kugel, die so genannte Antastkugel befestigt ist. Andere Antastelemente sind zum Beispiel Spitzen- oder Kugelscheiben. Mit dem anderen Ende ist der Taststift an dem beweglichen Teil des Tastkopfes befestigt, der sich gegenüber dem festen Teil verschiebt, wenn das Antastelement mit der Oberfläche eines Werkstückes in Kontakt kommt.

Bei den so genannten messenden Tastköpfen wird mit Hilfe geeigneter Messmittel die Verschiebung gemessen. Bei den so genannten schaltenden Tastköpfen wird die Verschiebung lediglich mittels eines elektrischen Schaltimpulses angezeigt. Auf den beweglichen Teil des Tastkopfes wirken Rückstellkräfte, damit der Tastkopf sich in einer definierten Lage gegenüber dem festen Teil des Tastkopfes befindet, wenn keine äußeren Kräfte auf den Taststift wirken.

Zum Stand der Technik (DE 10 2004 010 083 B4) gehören Koordinatenmessgeräte, bei denen die Tastköpfe Schaukeln aufweisen, die über Federparallelogrammbleche miteinander verbunden sind. Um möglichst viele unterschiedliche Messaufgaben erfüllen zu können, besitzen die Tastköpfe eine mechanische Schnittstelle, in die verschiedene Taststiftkonfigurationen eingesetzt oder automatisch eingewechselt werden können.

Gemäß dem Stand der Technik (DE 103 26 247 B4) ist bekannt, dass diese unterschiedlichen Taststiftkonfigurationen üblicherweise unterschiedliche Massen aufweisen, so dass nach jedem Einwechseln eines Taststiftes eine Off-Set-Kompensation durchzuführen ist. Durch die zusätzliche eingewechselte Taststiftmasse wird die Z-Achse im Tastkopf aus ihrer Nulllage ausgelenkt. Beim Vorgang der Off-Set-Kompensation wird diese Nulllage wieder hergestellt. Bei auskragenden Taststiften, die ein Drehmoment auf den Tastkopf ausüben, werden auch die X-Achse und Y-Achse in die Nulllage zurückgestellt.

Zu diesem Stand der Technik gehören drei Verfahren für die Off-Set-Kompensation, und zwar die elektronische Off-Set-Kompensation, die Off-Set-Kompensation alleine durch Software und die mechanische Off-Set-Kompensation.

Bei der elektronischen Off-Set-Kompensation wird das Signal des Wegmeßsystems im Tastkopf von der aktuellen neuen Position in Z-Richtung elektronisch auf "Null" gesetzt. Das heißt, es wird ein Off-Set bestimmt, der die Nullpunktverschiebung durch das zusätzliche Gewicht beschreibt. Dieser Off-Set wird elektronisch vorzeichenrichtig auf das Taststiftesignal aufaddiert (beispielsweise durch eine Addierschaltung am Eingang des Verstärkers, der das Meßsignal des Tastkopfes auswertet) und damit vollständig kompensiert.

Beim Ausgleich allein durch Software wird der Off-Set rein zahlenmäßig erfasst und bei der Auswertung des Taststiftesignals als Korrekturwert bei der Berechnung der Position berücksichtigt.

Voraussetzung für beide Methoden ist ein genügend großer Mess- und Linearitätsbereich des Wegmeßsystems im Tastkopf. Bei geringen Federkonstanten des Tastkopfes kann der Off-Set durch die Taststiftmasse und damit der Verlust an Messbereich ziemlich groß werden. Das bedeutet, dass dieses Verfahren den Nachteil hat, dass eine elektronische Off-Set-Kompensation oder eine Off-Set-Kompensation rein durch Software in diesem Fall allein nicht mehr ausreicht.

Bei der mechanischen Off-Set-Kompensation wird die Z-Schaukel, mit der die Taststiftkonfiguration verbunden ist, über eine Feder mit einem Antrieb bestehend aus Motor und Getriebe in Z-Richtung verbunden. Der Antrieb kann unterschiedlich ausgeführt sein, zum Beispiel als eine Spindel mit Spindelmutter, als kleine Seilwinde oder als ein Linearantrieb. Der Antrieb besitzt die Eigenschaft, dass er sehr genau positionieren kann und über einen Regler ansteuerbar ist.

Nach dem Einwechseln eines neuen Taststiftes wird der Off-Set zur Nulllage am Meßsystem bestimmt und der Antrieb durch den Regler so angesteuert, dass er die Auslenkung des Tastkopfes in Z-Richtung in die Nulllage des Meßsystems zieht. Ist der Ausgleichsvorgang beendet und die Achse genullt, schaltet der Off-Set-Kompensationsregelkreis ab. Durch die Selbsthemmung in der Mechanik bleibt die erreichte Z-Position erhalten.

Eine Off-Set-Kompensation kann lediglich durchgeführt werden, wenn der Taststift sich in einer Ruheposition befindet. Auch direkt vor einer Antastung am Werkstück wird zur Verbesserung des Messergebnisses eine erneute Off-Set-Kompensation durchgeführt. Wird ein Werkstück angefahren, führt der Taststift durch Beschleunigungs- und Abbremsvorgänge Schwingungen aus. Vor der Durchführung einer Off-Set-Kompensation müssen diese Schwingungen abklingen.

In der Praxis hat dieses den Nachteil, dass der Taststift bis kurz vor das Werkstück gefahren wird, und dass in einer Größenordnung von mehreren Sekunden gewartet wird, bis die freien Schwingungen des Taststiftes abgeklungen sind und anschließend die Off-Set-Kompensation durchgeführt werden kann.

Das der Erfindung zugrunde liegende technische Problem besteht darin, ein Verfahren zum Messen eines Werkstückes mit einem Koordinatenmessgerät anzugeben, bei dem die Abklingzeit deutlich reduziert ist. Durch diese reduzierte Abklingzeit soll sich die Gesamtdauer zur Vermessung des Werkstückes erheblich verkürzen.

Dieses technische Problem wird durch ein Verfahren mit den Merkmalen gemäß Anspruch 1 gelöst.

Das erfindungsgemäße Verfahren zum Messen eines Werkstückes mit einem Koordinatenmessgerät, wobei das Koordinatenmessgerät einen Tastkopf mit einem einwechselbaren Taststift aufweist mit folgenden Verfahrensschritten:
a) der Taststift wird für einen Antastvorgang in Richtung des Werkstückes bewegt,
b) der Taststift wird in Kontakt mit dem Werkstück gebracht und ausgelenkt,
c) die Auslenkung des Taststiftes wird durch Messwerte erfasst,
d) der Taststift wird zurückgefahren und es werden die Messwerte der Auslenkung erfasst,
zeichnet sich dadurch aus, dass die Verfahrensschritte a) und b) ohne Unterbrechung der Bewegung des Taststiftes in Richtung Werkstück durchgeführt werden, und dass nach der Erfassung der Messwerte, wenn der Taststift und das Werkstück nicht mehr in Kontakt sind und der Taststift in Ruhe ist, der bestehende Off-Set erfasst wird, und dass wenn der Off-Set ungleich Null ist, der Off-Set kompensiert wird.

Das erfindungsgemäße Verfahren weist den Vorteil auf, dass der Taststift für den Antastvorgang in Richtung des Werkstückes bewegt wird und der Taststift in Kontakt mit dem Werkstück gebracht und ausgelenkt wird, ohne dass vorher ein Abklingen der freien Schwingungen des Taststiftes erfolgt. Das Abklingen der freien Schwingungen des Taststiftes erfolgt durch den Kontakt mit dem Werkstück. Das Werkstück weist eine deutlich größere Masse auf als der Taststift, so dass die Abklingzeit deutlich reduziert ist gegenüber einer Abklingzeit eines frei schwingenden Taststiftes.

Diese freien Schwingungen des Taststiftes unterscheiden sich aufgrund des unterschiedlichen Feder-Masse-Systems von den Schwingungen, die auftreten, wenn der Taststift mit dem Werkstück in Kontakt gebracht wird. Bei dem Kontakt des Taststiftes mit dem Werkstück wird der Tastkopf angeregt. Der Tastkopf reagiert mit Schwingungen einer anderen Frequenz darauf. Diese beiden Schwingungen, das heißt die freien Schwingungen des Taststiftes, die auftreten, wenn der Taststift nicht in Kontakt mit einem Werkstück steht, und die Schwingungen des Taststiftes beim Kontakt mit dem Werkstück, wenn der Tastkopf angeregt wird, unterscheiden sich im Frequenzbereich und den Dämpfungseigenschaften.

Wird ein Taststift in Richtung des Werkstückes gefahren, so wird er kurz vor dem Kontakt mit dem Werkstück abgebremst. Bei diesem Abbremsvorgang wird der Taststift in Schwingungen versetzt. Die Abklingzeit für diese Schwingungen dauert gemäß dem Stand der Technik mehrere Sekunden, beispielsweise mehr als zwei Sekunden.

Erst wenn der Abklingvorgang vollständig durchgeführt ist, wird gemäß dem Stand der Technik eine Off-Set-Kompensation durchgeführt und der eigentliche Antastvorgang kann beginnen. Dies erhöht die Messzeit an einem Werkstück erheblich.

Unter Off-Set-Kompensation wird ein Vorgang verstanden, der auch als Gewichtsausgleich in der Koordinatenmesstechnik bezeichnet wird.

Insbesondere beim Einwechseln von sehr schweren Taststiften ist es nicht ausreichend, eine Off-Set-Kompensation unmittelbar nach dem Einwechseln des Taststiftes durchzuführen. Bei dieser ersten Off-Set-Kompensation findet zwar schon eine Korrektur statt. Bei schweren Taststiften muss jedoch mindestens eine weitere Off-Set-Kompensation durchgeführt werden, da der so genannte Off-Set sich noch über einen längeren Zeitraum, beispielsweise mehrere Minuten verändern kann.

Aus diesem Grunde weist das erfindungsgemäße Verfahren den entscheidenden Vorteil auf, dass die Abklingzeit deutlich verkürzt werden kann, dadurch dass der Taststift nicht freischwingend abklingt, sondern an das Werkstück gefahren wird und hierdurch die Abklingzeit sich wenigstens halbiert.

Der Vorteil bei diesem Verfahren ist, dass die Dämpfung des Tastkopfes nicht mehr so hoch sein muss. Gemäß dem Stand der Technik ist eine relativ große Dämpfung in dem Tastkopf vorgesehen, damit der Taststift nicht so große Schwingungen beim Anfahren und Abbremsen durchführt.

Ist die Dämpfung nicht mehr so hoch, wirken sich die Trägheitskräfte nicht so stark aus und es werden bessere Messwerte mit dem erfindungsgemäßen Verfahren erhalten.

Vorteilhaft wird der nach der Antastung ermittelte Off-Set mit den Messwerten so verrechnet, als wäre eine Off-Set-Kompensation schon vor der Messung erfolgt.

Gemäß einer besonders vorteilhaften Ausführungsform der Erfindung ist vorgesehen, dass der Taststift das Werkstück antastet ohne vorheriges Abklingen von durch das Beschleunigen oder Abbremsen des Taststiftes entstehenden Schwingungen.

Dieses Verfahren weist den Vorteil auf, dass mit dem Taststift unmittelbar das Werkstück angefahren wird, so dass eine erhebliche Einsparung bei der Gesamtmesszeit erzielt wird.

Gemäß einer weiteren vorteilhaften Ausführungsform der Erfindung ist vorgesehen, dass zwischen den Verfahrensschritten b) (der Taststift wird in Kontakt mit dem Werkstück gebracht und ausgelenkt) und c) (die Auslenkung des Taststiftes wird durch Messwerte erfasst), oder zwischen den Verfahrensschritten c) (die Auslenkung des Taststiftes wird durch Messwerte erfasst) und d) (der Taststift wird zurückgefahren und es werden die Messwerte der Auslenkung erfasst) ein Abklingen von durch das Beschleunigen oder Abbremsen entstehenden Schwingungen des Taststiftes erfolgt.

Das bedeutet, dass der Taststift auf jeden Fall in Kontakt mit dem Werkstück gebracht wird und ausgelenkt wird, ohne dass vorher ein Abklingen der Schwingungen erfolgt. Das Abklingen der Schwingungen erfolgt, wenn der Taststift schon in Kontakt mit dem Werkstück ist. Wie schon beschrieben, wird hierdurch die Abklingzeit deutlich reduziert, da das Werkstück eine deutlich größere Masse aufweist als der Taststift und damit die Schwingungen deutlich schneller abklingen.

Gemäß einer weiteren vorteilhaften Ausführungsform der Erfindung ist vorgesehen, dass beim Zurückfahren des Taststiftes Messwerte der Auslenkung des Taststiftes erfasst werden, bis die Auslenkung des Taststiftes konstant bleibt über einen vorgegebenen Zeitraum oder einer vorgegebenen Fahrstrecke des Tastkopfes.

Nach dem Abklingen der Schwingungen des Taststiftes wird der Taststift zurückgefahren. Hierbei wird die Auslenkung des Taststiftes erfasst. Beim Antasten des Werkstückes wird der Taststift um eine gewisse Wegstrecke ausgelenkt, beispielsweise 100 um. Beim Zurückfahren werden die Messwerte erfasst, so dass erfasst werden kann, wann der Taststift sich nicht mehr im Kontakt mit dem Werkstück befindet. Hierdurch kann die Position des Taststiftes an dem Werkstück erfasst werden. Über die Erfassung der Position des Tastkopfes wird ein Messwert mit einer entsprechenden Information über das Werkstück erhalten.

Beim Zurückfahren des Taststiftes wirken Rückstellkräfte auf den Taststift, so dass die Auslenkung des Taststiftes beim Zurückfahren sich wieder verringert. Ab einem gewissen Punkt bleibt die Auslenkung des Taststiftes konstant oder beträgt im Idealfall Null. Ist die Auslenkung nicht Null, sondern die Auslenkung entspricht einem konstanten Wert, wird gemäß der vorteilhaften Ausführungsform überprüft, ob die Auslenkung über einen vorgegebenen Zeitraum und/oder über eine vorgegebene Fahrstrecke des Tastkopfes konstant bleibt. In diesem Fall wird davon ausgegangen, dass kein Kontakt mehr mit dem Werkstück besteht und es werden die genauen Werkstückpositionen unter Berücksichtigung des vorhandenen Off-Set der Auslenkung bestimmt.

Gemäß einer weiteren vorteilhaften Ausführungsform der Erfindung ist vorgesehen, dass beim Zurückfahren des Taststiftes Messwerte der Auslenkung des Taststiftes erfasst werden, bis die Auslenkung des Taststiftes Null ist.

Der Taststift wird beim Antasten des Werkstückes ausgelenkt. Beim Zurückfahren des Taststiftes wirken die Rückstellkräfte auf den Taststift, so dass der Taststift im Idealfall keine Auslenkung mehr aufweist, wenn er nicht mehr mit dem Werkstück in Kontakt steht. Diese Position wird erfasst, so dass genaue Werkstückinformationen ermittelt werden können.

Gemäß einer weiteren vorteilhaften Ausführungsform der Erfindung ist vorgesehen, dass eine Einzelpunktantastung durchgeführt wird.

Das erfindungsgemäße Verfahren ist am vorteilhaftesten bei einer Einzelpunktantastung einsetzbar.

Eine weitere vorteilhafte Ausführungsform der Erfindung sieht vor, dass nach dem Antasten des Werkstückes eine Off-Set-Kompensation durchgeführt wird. Wird der Taststift mit dem Werkstück in Verbindung gebracht, erfolgt ein Abklingen der Schwingungen des Taststiftes. Vorteilhaft wird danach eine Off-Set-Kompensation durchgeführt.

Gemäß einer weiteren vorteilhaften Ausführungsform der Erfindung ist vorgesehen, dass beim Zurückfahren des Taststiftes, das heißt von dem Werkstück weg, wenigstens eine weitere Off-Set-Kompensation durchgeführt wird.

Die Auswahl eines Taststiftes, beispielsweise eines sehr schweren Taststiftes, kann es erforderlich machen, dass beim Zurückfahren des Taststiftes, das heißt, der Taststift bewegt sich von dem Werkstück weg, und bei der Erfassung der Messwerte wenigstens eine weitere Off-Set-Kompensation durchgeführt wird, um die Messgenauigkeit insgesamt zu erhöhen.

Vorteilhaft werden nach dem Durchführen einer Off-Set-Kompensation die Messwerte korrigiert.

Der so genannte Off-Set wird vorteilhaft aus den Messwerten herausgerechnet.

Gemäß einer weiteren vorteilhaften Ausführungsform wird ein von Null abweichender Restwert der Auslenkung von den Messwerten subtrahiert.

Wie schon ausgeführt, besteht die Möglichkeit, dass der Taststift aufgrund der Rückstellkräfte nicht in die Nullposition zurückkehrt, wenn kein Kontakt mehr mit dem Werkstück besteht, sondern es kann ein Restwert einer Auslenkung bleiben. Dieser Restwert der Auslenkung wird von den Messwerten subtrahiert, um die Messwerte zu korrigieren und um die Messgenauigkeit hierdurch zu erhöhen.

Gemäß einer weiteren vorteilhaften Ausführungsform der Erfindung beträgt eine Abklingzeit zum Abklingen von durch das Anfahren des Werkstückes entstehenden Schwingungen weniger als eine Sekunde. Besonders vorteilhaft beträgt die Abklingzeit weniger als eine halbe Sekunde.

Dadurch, dass das Abklingen der Schwingungen durchgeführt wird, während der Taststift schon das Werkstück antastet, wird die Abklingzeit deutlich reduziert.

Gemäß einer weiteren vorteilhaften Ausführungsform der Erfindung wird eine elektronische Off-Set-Kompensation und/oder eine Off-Set-Kompensation durch Software und/oder eine mechanische Off-Set-Kompensation durchgeführt.

Eine elektronische Off-Set-Kompensation oder eine Off-Set-Kompensation mit Software weist den Vorteil auf, dass kein gesonderter Antrieb für eine Off-Set-Kompensationsvorrichtung vorgesehen ist. Eine mechanische Off-Set-Kompensation weist den Vorteil auf, dass diese relativ einfach aufgebaut werden kann.

Weitere Merkmale und Vorteile der Erfindung ergeben sich anhand der zugehörigen Zeichnungen, in denen verschiedene Ausführungsformen eines Antastvorganges nur beispielhaft dargestellt sind, ohne die Erfindung auf diese Ausführungsbeispiele zu beschränken. In den Zeichnungen zeigen:
- Fig. 1: ein Koordinatenmessgerät in perspektivischer Ansicht;
- Fig. 2: einen Tastkopf mit Taststift vor einer Antastung;
- Fig. 3: einen Tastkopf mit Taststift beim Abbremsen vor dem Werkstück;
- Fig. 4: einen Tastkopf mit Taststift beim Antasten an einem Werkstück;
- Fig. 5: einen Tastkopf mit Taststift während des Abklingvorganges und/oder des Messvorganges in Kontakt mit dem Werkstück;
- Fig. 6: eine Darstellung während des Zurückfahrens des Tastkopfes;
- Fig. 7a: ein Diagramm bezüglich des Verfahrweges und der Auslenkung des Taststiftes gemäß dem Stand der Technik;
- Fig. 7b: ein Diagramm bezüglich des Verfahrweges und der Auslenkung des Taststiftes gemäß dem erfindungsgemäßen Verfahren;
- Fig. 8: ein Diagramm mit Darstellung der Verfahrwege und Tastkopfauslenkungen für den Stand der Technik (a und b) und das erfindungsgemäße Verfahren (c und d) sowie der sich ergebende Zeitgewinn.

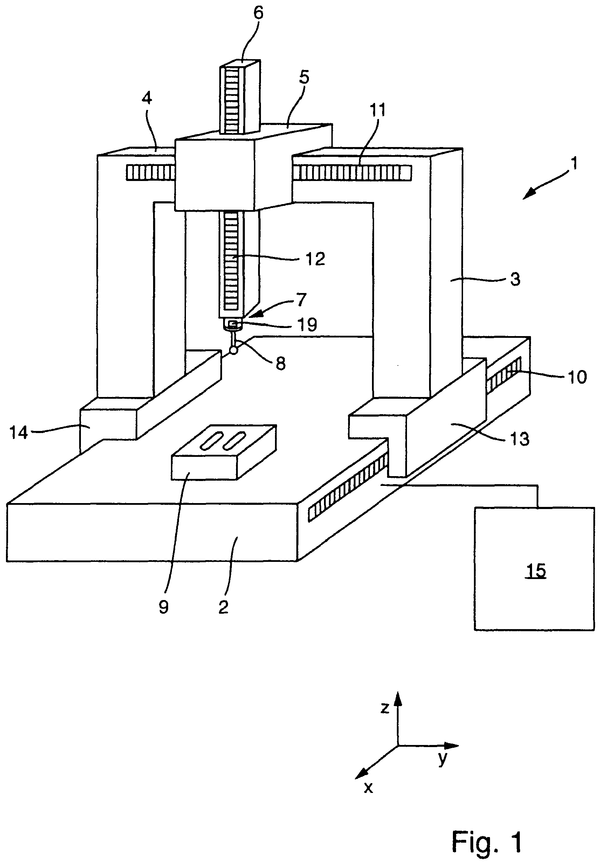

Fig. 1 zeigt ein Koordinatenmessgerät in Portalbauweise mit einem Werkzeugtisch 2 und einem Portal 3. Das Portal 3 weist eine Traverse 4 auf. An der Traverse 4 ist ein Schlitten 5 angeordnet, an dem wiederum eine Pinole 6 angeordnet ist. Das Portal 3 ist in X-Richtung beweglich, der Schlitten 5 in Y-Richtung und die Pinole 6 in Z-Richtung. An der Pinole 6 ist ein Tastkopf 7 angeordnet, der einen Taststift 8 trägt. Auf dem Messtisch 2 des Koordinatenmessgerätes 1 ist ein Werkstück 9 angeordnet.

An dem Messtisch 2 ist ein Maßstab 10 angeordnet, an der Traverse 4 ein Maßstab 11 und an der Pinole 6 ein Maßstab 12. Über entsprechende Wegmeßsysteme (nicht dargestellt) kann die Position des Taststiftes 8 erfasst werden. Das Portal 3 weist Portalfüße 13, 14 auf, mit denen das Portal 3 an dem Messtisch 2 beweglich angeordnet ist. Über einen Rechner 15, der auch eine Steuereinheit enthält, werden die Messwerte erfasst und verarbeitet.

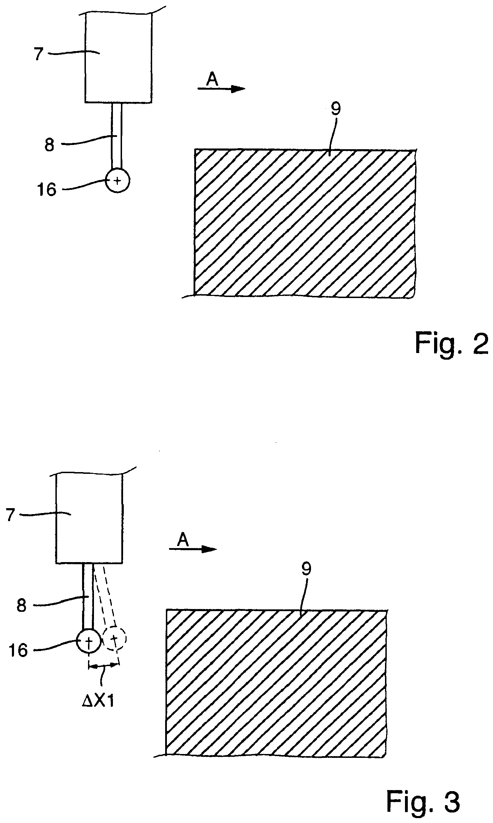

Fig. 2 zeigt den Tastkopf 7 mit dem Taststift 8, an dem eine Tastkugel 16 angeordnet ist. Der Tastkopf 7 wird anschließend in Richtung des Pfeiles A in Richtung des Werkstückes 9 bewegt.

Durch Beschleunigung und Abbremsung des Tastkopfes 7 wird der Taststift 8 mit der Tastkugel 16 ausgelenkt. Insbesondere bei einem Abbremsvorgang vor dem Werkstück 9 wird der Taststift mit der Tastkugel, wie in Fig. 3 dargestellt, in die gestrichelt dargestellte Position ausgelenkt und oszilliert mit abnehmender Amplitude. Die Auslenkung, exemplarisch in X-Richtung, wird mit der Größe ΔX1 beschrieben.

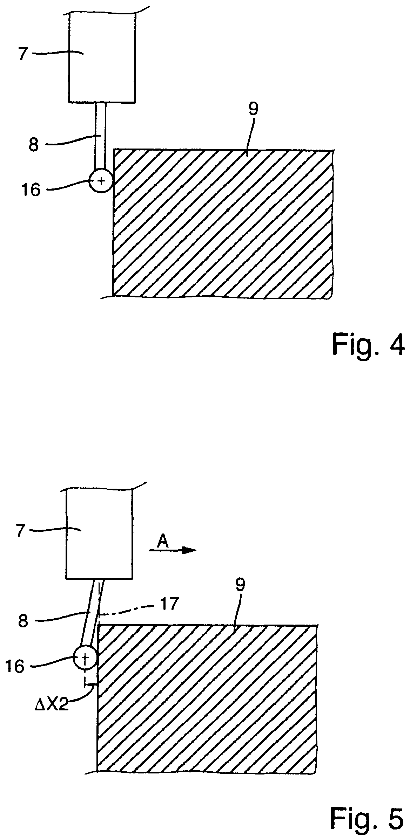

Gemäß Fig. 4 wird nach dem erfindungsgemäßen Verfahren der Taststift 8 mit der Tastkugel 16 an das Werkstück 9 herangefahren, bis ein Kontakt zwischen der Tastkugel 16 und dem Werkstück 9 vorhanden ist, ohne dass vorher ein Abklingen der Schwingungen des Taststiftes 8 abgewartet wird.

Bei der Berührung der Tastkugel 16 mit dem Werkstück 9 beginnt der Abklingvorgang.

Wie in Fig. 5 dargestellt, wird der Tastkopf 7 weiter in Richtung des Pfeiles A verfahren, so dass der Taststift 8 um den Betrag ΔX2 ausgelenkt wird. Bei diesem Vorgang erfolgt ein Abklingen der Schwingungen des Taststiftes 8. Dieser Abklingvorgang ist deutlich kürzer als ein Abklingvorgang in einer Position, wie sie in Fig. 3 dargestellt ist.

Gemäß Fig. 5 liegt die Tastkugel 16 an dem Werkstück 9 an. Nachdem der beschleunigte Abklingvorgang beendet ist, kann nunmehr die Erfassung der Messwerte durchgeführt werden.

Während der Erfassung der Messwerte wird der Tastkopf 7 entgegen der Richtung des Pfeiles A zurückgefahren über die Position, wie sie in Fig. 4 dargestellt ist. Der Taststift 8 stellt sich hierbei in seine Nulllage zurück, die in Fig. 5 mit der gestrichelten Linie 17 bezeichnet ist.

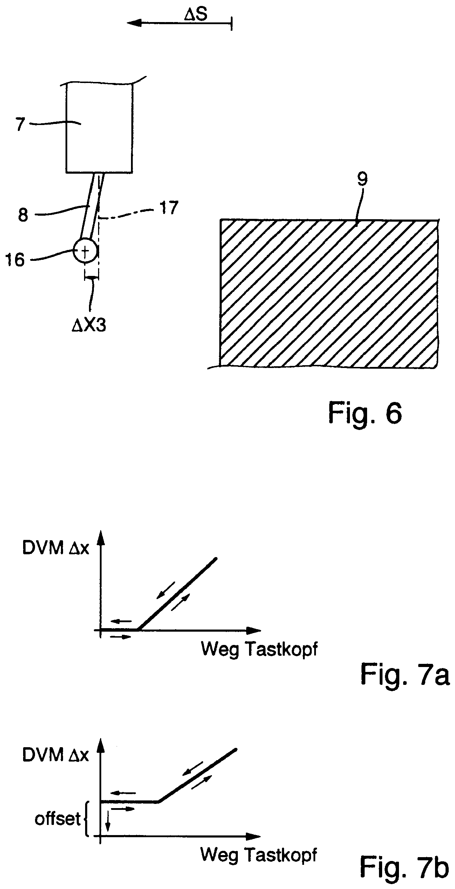

Wie in Fig. 6 dargestellt, besteht auch die Möglichkeit, dass der Taststift 8 sich nicht vollständig in die Nulllage zurückstellt, sondern um einen Betrag ΔX3 ausgelenkt bleibt. Befindet sich der Taststift 8 in seiner Nulllage oder, wie in Fig. 6 dargestellt, über einen gewissen Zeitraum in der in Fig. 6 dargestellten Position, wird von dem Koordinatenmessgerät 1 erkannt, dass eine Antastung an dem Werkstück 9 nicht mehr vorliegt.

Das Koordinatenmessgerät 1 erkennt auch, dass eine Antastung nicht mehr vorliegt, wenn der Tastkopf 7 eine gewisse Wegstrecke ΔS von dem Werkstück 9 wegbewegt ist und sich die Größe ΔX3, das heißt die Auslenkung des Taststiftes 8 nicht mehr weiter verändert.

In diesem Fall, wäre auch in dem Schritt, der in Fig. 2 gezeigt ist, eine ebensolche Auslenkung vorhanden gewesen.

Die eigentliche Messwerterfassung erfolgt in der Position der in Fig. 5 dargestellten Position, nämlich wenn der Tastkopf 7 mit dem Taststift 8 maximal an das Werkstück 9 herangefahren ist und dann wieder entgegen der Richtung des Pfeiles A zurückgefahren wird. Beim Zurückfahren werden die eigentlichen Messwerte erfasst.

Gemäß Fig. 7a ist in dem Diagramm der zurückgelegte Weg des Tastkopfes 7 exemplarisch gegenüber der Auslenkung ΔX nach dem Stand der Technik dargestellt. Gemäß dem Stand der Technik wird die Auslenkung durch eine Off-Set-Kompensation auf Null gesetzt, bevor an das Material gefahren wird, wodurch schließlich eine Auslenkung bewirkt wird. Beim Antasten ergibt sich der lineare Anstieg der Auslenkung bis zum Erreichen eines Schwellwertes. Bei der Fahrt aus dem Material, das heißt von dem Werkstück 9 weg, wird die gleiche Kurve in umgekehrter Richtung durchlaufen. Die Auslenkung ist danach wieder Null.

Wie in Fig. 7b dargestellt, muss erfindungsgemäß nicht gewartet werden, bis die Schwingungen abgeklungen sind, um eine Off-Set-Kompensation durchzuführen, die wiederum die Auslenkung auf Null setzt, sondern es wird mit vorhandener bekannter Auslenkung ins Material, das heißt an das Werkstück 9, gefahren. Bei der Fahrt aus dem Material wird so weit gefahren, bis sich die Auslenkung nicht mehr verändert, und dieser konstante Wert, der als Off-Set bezeichnet wird, wird vorteilhaft von den Auslenkwerten abgezogen.

In Fig. 7a und 7b sind vorhandene Schwingungen zum Zwecke der Übersichtlichkeit nicht dargestellt.

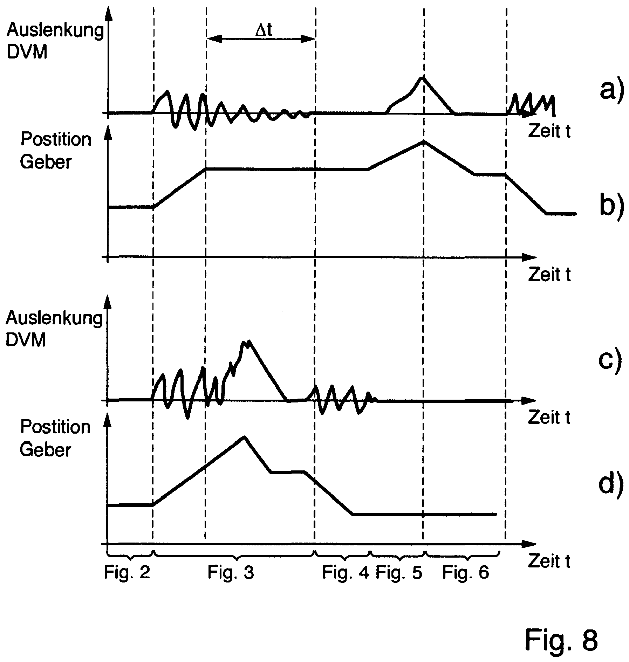

In Fig. 8 sind die Verfahrwege des Tastkopfes sowie die Auslenkungen schematisch dargestellt. Gemäß dem Stand der Technik (obere Signale (a und b)) wird zunächst das Abklingen der Schwingungen der Auslenksignale abgewartet und dann die Antastung ausgeführt. Erfindungsgemäß (untere Signale (c und d)) wird schon mit dem schwingenden Taststift 8 in das Material gefahren. Das heißt, die Tastkugel 16 wird mit dem Werkstück 9 in Kontakt gebracht, ohne dass ein Abklingen der Schwingungen der Tastkugel 16 abgewartet wird. Während der Fahrt ins Material, das heißt bei Berührung der Tastkugel 8 und des Werkstückes 9, klingen die Schwingungen aufgrund der größeren Masse des Werkstückes 9 gegenüber der kleineren Masse des Taststiftes 8 schneller ab, so dass die Messung früher erfolgen kann als bei dem Stand der Technik.

Δt stellt die Differenz der Zeit dar, die zwischen dem Abklingvorgang gemäß dem Stand der Technik und dem Abklingvorgang gemäß dem erfindungsgemäßen Verfahren liegt. Das erfindungsgemäße Verfahren weist gegenüber dem Stand der Technik eine erhebliche Zeitersparnis auf.

In Fig. 8 (Kurven b und d) ist das Signal des Positionsgebers ebenfalls dargestellt, und zwar in Bezug auf die in den Fig. 2 bis 6 dargestellten Antastpositionen des Taststiftes 8. Sämtliche Kurven a bis d in der Fig. 8 sind in dem zeitlichen Zusammenhang zu den in den Fig. 2 bis 6 dargestellten Antastpositionen dargestellt.

In Fig. 8 ist mit DVM (Digital Voltmeter) das Tastkopfesignal bezeichnet.

### Bezugszahlen

- 1: Koordinatenmessgerät
- 2: Messtisch
- 3: Portal
- 4: Traverse
- 5: Schlitten
- 6: Pinole
- 7: Tastkopf
- 8: Taststift
- 9: Werkstück
- 10: Maßstab
- 11: Maßstab
- 12: Maßstab
- 13: Portalfuß
- 14: Portalfuß
- 15: Computer
- 16: Tastkugel
- 17: Null-Position des Taststiftes
- A: Pfeil
- ΔX1: Auslenkung des Taststiftes
- ΔX2: Auslenkung des Taststiftes
- ΔX3: Auslenkung des Taststiftes
- ΔS: zurückgelegter Weg des Tastkopfes
- Δt: Zeitdifferenz zwischen Antastung gemäß Stand der Technik und Erfindung
- DVM ΔX: Auslenkung des Taststiftes, exemplarisch für X-Richtung

## Patentansprüche

1. Verfahren zum Messen eines Werkstückes (9) mit einem Koordinatenmessgerät (1), wobei das Koordinatenmessgerät (1) einen Tastkopf (7) mit einem einwechselbaren Taststift (8) aufweist, mit folgenden Verfahrensschritten:
a) der Taststift (8) wird für einen Antastvorgang in Richtung des Werkstückes (9) bewegt,
b) der Taststift (8) wird in Kontakt mit dem Werkstück (9) gebracht und ausgelenkt,
c) die Auslenkung des Taststiftes (8) wird durch Messwerte erfasst,
d) der Taststift (8) wird zurückgefahren und es werden die Messwerte der Auslenkung erfasst,
**dadurch gekennzeichnet, dass** die Verfahrensschritte a) und b) ohne Unterbrechung der Bewegung des Taststiftes (8) in Richtung Werkstück (9) durchgeführt werden, und dass nach der Erfassung der Messwerte, wenn der Taststift (8) und das Werkstück (9) nicht mehr in Kontakt sind und der Taststift (8) in Ruhe ist, der bestehende Off-Set erfasst wird, und dass, wenn der Off-Set ungleich Null ist, der Off-Set kompensiert wird.

2. Verfahren nach Anspruch 1, **dadurch gekennzeichnet, dass** der Taststift (8) das Werkstück (9) antastet ohne vorheriges Abklingen von durch das Beschleunigen oder Abbremsen des Taststiftes (8) entstehenden Schwingungen.

3. Verfahren nach Anspruch 1 oder 2, **dadurch gekennzeichnet, dass** die Verfahrensschritte b) und c) nacheinander durchgeführt werden ohne eine elektronische Off-Set-Kompensation und/oder eine Off-Set-Kompensation durch Software und/oder eine mechanische Off-Set-Kompensation.

4. Verfahren nach einem der vorhergehenden Ansprüche, **dadurch gekennzeichnet, dass** beim Zurückfahren des Taststiftes (8) Messwerte der Auslenkung des Taststiftes (8) erfasst werden, bis die Auslenkung des Taststiftes (8) konstant bleibt über einen vorgegebenen Zeitraum und/oder einer vorgegebenen Fahrstrecke (ΔS) des Tastkopfes (7).

5. Verfahren nach einem der vorhergehenden Ansprüche, **dadurch gekennzeichnet, dass** beim Zurückfahren des Taststiftes (8) Messwerte der Auslenkung des Taststiftes (8) erfasst werden, bis die Auslenkung des Taststiftes (8) Null ist.

6. Verfahren nach einem der vorhergehenden Ansprüche, **dadurch gekennzeichnet, dass** eine Einzelpunktantastung durchgeführt wird.

7. Verfahren nach einem der vorhergehenden Ansprüche, **dadurch gekennzeichnet, dass** nach dem Antasten des Werkstückes (9) eine Off-Set-Kompensation durchgeführt wird.

8. Verfahren nach einem der vorhergehenden Ansprüche, **dadurch gekennzeichnet, dass** beim Zurückfahren des Taststiftes (8) wenigstens eine weitere Off-Set-Kompensation durchgeführt wird.

9. Verfahren nach einem der vorhergehenden Ansprüche, **dadurch gekennzeichnet, dass** nach dem Durchführen einer Off-Set-Kompensation die Messwerte korrigiert werden.

10. Verfahren nach einem der vorhergehenden Ansprüche, **dadurch gekennzeichnet, dass** ein von Null abweichender Restwert der Auslenkung des Taststiftes (8) von den Messwerten subtrahiert wird.

11. Verfahren nach einem der vorhergehenden Ansprüche, **dadurch gekennzeichnet, dass** eine Abklingzeit zum Abklingen von durch das Anfahren des Werkstückes (9) entstehenden Schwingungen durch die größere Masse des Werkstückes gegenüber der Masse des Taststiftes verkürzt wird und weniger als eine Sekunde beträgt.

12. Verfahren nach einem der vorhergehenden Ansprüche, **dadurch gekennzeichnet, dass** eine elektronische Off-Set-Kompensation und/oder eine Off-Set-Kompensation durch Software und/oder eine mechanische Off-Set-Kompensation durchgeführt wird.

13. Verfahren nach einem der vorhergehenden Ansprüche, **dadurch gekennzeichnet, dass** durch den Verzicht der Offsetkompensation vor der Antastung eine zusätzliche Zeitersparnis erreicht wird.
